# EUROPEAN PATENT SPECIFICATION

(11) **EP 3 379 721 B1**
(45) Date of publication and mention of the grant of the patent: **09.03.2022**
(21) Application number: 15908761.8
(22) Date of filing: 19.11.2015
(51) Int. Cl.: H02P 29/00

(54) **POWER CONVERSION DEVICE**
STROMWANDLUNGSVORRICHTUNG
DISPOSITIF DE CONVERSION DE PUISSANCE

(43) Date of publication of application: 26.09.2018
(73) Proprietor: Hitachi Industrial Equipment Systems Co., Ltd., Tokyo 101-0022 (JP)
(72) Inventor: TANAKA Makoto, Tokyo 101-0022 (JP)
(74) Representative: MERH-IP Matias Erny Reichl Hoffmann Patentanwälte PartG mbB
(86) International application number: PCT/JP2015/082481
(87) International publication number: WO 2017/085821

(56) References cited:
- WO-A1-2012/114901
- WO-A1-2013/136515
- WO-A1-2015/136672
- JP-A- 2008 022 638
- JP-A- 2013 048 526
- JP-A- 2013 048 526
- JP-B2- 3 582 856
- US-A- 5 281 955
- US-A1- 2013 241 444

## Description

### TECHNICAL FIELD

The present invention relates to a power conversion device.

### BACKGROUND ART

Patent Literature 1 (JP-A-2014-26755) discloses that "a control device used in devices such as a temperature controller, a communication device, a display device, a drive device, an input/output device, and a power supply device includes a terminal block through which a signal is input from a power source, a sensor or the like, and also output a signal to a control target device" and that "there is a plurality of types of terminal blocks having different specifications and functions, and thus, there is a need to suppress execution of processing of various signals between terminal blocks other than predefined types of terminal blocks."

### CITATION LIST

### PATENT LITERATURE

PATENT LITERATURE 1: JP-A-2014-26755
PATENT LITERATURE 2: JP 2013 048525 APATENT LITERATURE 3: WO 2015/136672 A1

### SUMMARY OF INVENTION

### TECHNICAL PROBLEM

According to Patent Literature 1, there are issues that "with a method of distinguishing the terminal block type by using different shapes of connectors, it is difficult to sufficiently increase the types of distinguishable terminal blocks because the distinction is fundamentally focused on insertion errors. In addition, in order to make a difference in the shapes of the connectors, the shapes of molds for manufacture need to be changed at a designing stage and the mold corresponding to individual shapes need to be changed at manufacturing, leading to extra time and labor in order to manage many product types. Meanwhile, it is conceivable to use a portion of the connector pins to electrically distinguish the terminal block types. This method, however, the portion of the connector pins is assigned to a function for distinguishing the terminal block types, making it difficult to use the pin as originally designed."

Patent Literature 2 describes a motor system with a motor controller capable of being connected to a plurality of models of motors.

Patent Literature 3 describes a motor control apparatus configured to control driving of a motor. It includes a notification control part configured to control a display unit of an external terminal to notify about setting confirmation of a predetermined control parameter in accordance with the type of the motor determined by a motor type determination part.

Against these issues, connected terminal blocks are individually set by the user or provided as exclusive items in conventional applications.

### SOLUTION TO PROBLEM

The problems described above are solved by the subject matter of the appended claims. In particular, there are provided a control unit that outputs a signal to drive a motor and a terminal unit that transmits an identification signal as information related to a terminal block type to the control unit, and the control unit sets a parameter on the basis of the identification signal transmitted by the terminal unit, as defined in the independent apparatus claim 1 and the independent method claim 6.

### ADVANTAGEOUS EFFECTS OF INVENTION

According to the present invention, it is possible to provide a power conversion device capable of accurately identifying the type of a connected terminal block substrate. Problems, configurations, and effects other than those described above will be clarified from the description of the embodiments below.

### BRIEF DESCRIPTION OF DRAWINGS

[FIG. 1] FIG. 1 is an exemplary diagram of a typical configuration of a power conversion device according to the present invention.
[FIG. 2] FIG. 2 is an exemplary diagram of a typical configuration for transferring a terminal block type identification signal in the power conversion device according to the present invention.
[FIG. 3] FIG. 3 is a flowchart of terminal block type determination processing in the power conversion device according to the present invention.
[FIG. 4] FIG. 4 is a flowchart of parameter display propriety determination processing.
[FIG. 5] FIG. 5 is a flowchart of parameter initial value setting processing.
[FIG. 6] FIG. 6 is an exemplary display propriety determination table used in the flowchart of FIG. 4.
[FIG. 7] FIG. 7 is an exemplary initial setting value table used in the flowchart of FIG 4.
[FIG. 8] FIG. 8 is an exemplary configuration diagram of Embodiment 4-1.
[FIG. 9] FIG. 9 is an exemplary configuration diagram of Embodiment 4-2.
[FIG. 10] FIG. 10 is an exemplary configuration diagram of Embodiment 4-3.
[FIG. 11] FIG. 11 is an exemplary configuration diagram of Embodiment 4-4.

### DESCRIPTION OF EMBODIMENTS

Hereinafter, embodiments will be described with reference to the drawings.

### Embodiment 1

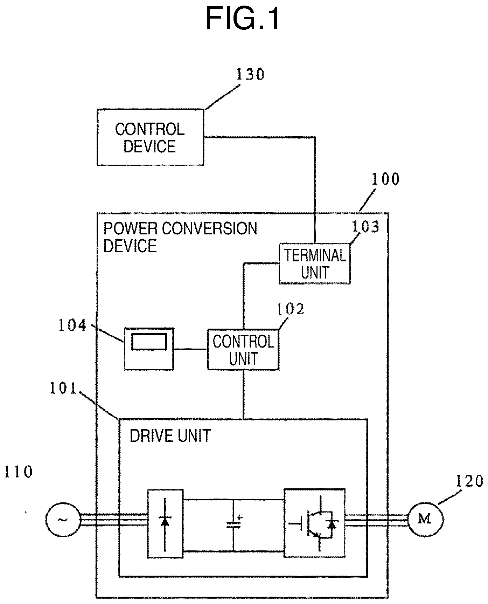

FIG. 1 is an exemplary diagram of a typical configuration of a power conversion device according to the present invention. Note that same reference numerals are attached to common configurations in the drawings. In addition, the embodiments described below are not limited to the illustrated examples.

FIG. 1 includes a power conversion device (100), a power supply device (110), a motor (120), and a control device (130).

The power supply device (110) is a device to supply electrical energy to various devices. Examples of the power supply device (110) include a three-phase AC transformer.

The motor (120) is a device capable of converting electrical energy into mechanical energy. Examples of the motor (120) include a three-phase AC motor.

The control device (130) is a device that delivers a signal for controlling operation of the motor (120) to the power conversion device (100) and receives a control state from the power conversion device (100). Examples of the control device (130) include a programmable logic controller (hereinafter referred to as PLC).

The power conversion device (100) includes a drive unit (101) to transfer the electrical energy received from the power supply device (110) to the motor (120), a control unit (102) to deliver a control signal for driving the motor to the driving unit, a terminal unit (103) to transfer a signal between the control device (130) and the control unit (102), and a display setting unit (104) configured to display a state of the power conversion device, or to set the parameter described later. The terminal unit (103) judges the type of the terminal block being connected and informs this judgment to the control unit (102). The display setting unit (104) performs parameter setting on the basis of the information indicating the type of the terminal block.

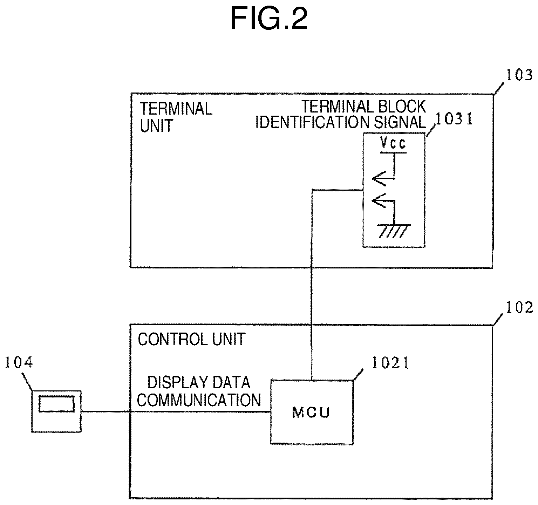

FIG. 2 is an exemplary diagram of a typical configuration for transferring a terminal block type identification signal in the power conversion device (100) according to the present invention. This diagram illustrates exemplary wiring between the control unit (102) and the terminal block identification signal (1031) of the terminal unit (103).

The terminal unit (103) includes an identification signal generation unit (1031) that generates a terminal block identification signal. The generated signal is delivered to an MCU (1021) in the control unit (102). On the basis of the information of the terminal block identification signal, the MCU (1021) selects a parameter to be displayed and delivers display data to the display setting unit (104).

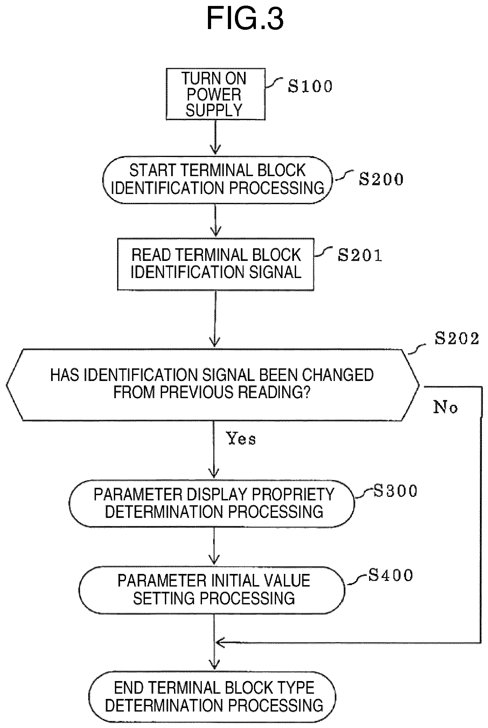

FIG. 3 is a flowchart of terminal block type determination processing in the power conversion device (100) according to the present invention. First, the power supply for the power conversion device (100) is turned on (step S100) and thereafter, terminal block identification processing (step S200) is executed. In the terminal block identification processing, reading of the terminal block identification signal is first executed (step S201) from the terminal unit (103). Whether the read terminal block identification signal matches the signal read at the previous power-on is determined (step S202), and when they match, the processing is finished. This is because there is no need to perform parameter setting according to the type of the connected terminal block. In a case where they do not match, both or one of the parameter display propriety determination processing (step S300) and the parameter initial value setting processing (step S400) is executed.

While FIG. 3 is a case where the processing of step S300 and step S400 are both executed and whether the parameter is changed and whether a hidden parameter is present are determined in individual processing procedures, it is allowable to first determine whether to execute the processing, and there is no need to perform any of the processing procedures when the processing is unnecessary.

### Embodiment 2

Details of the parameter display propriety determination processing (S300 in FIG. 3) will be described in Embodiment 2.

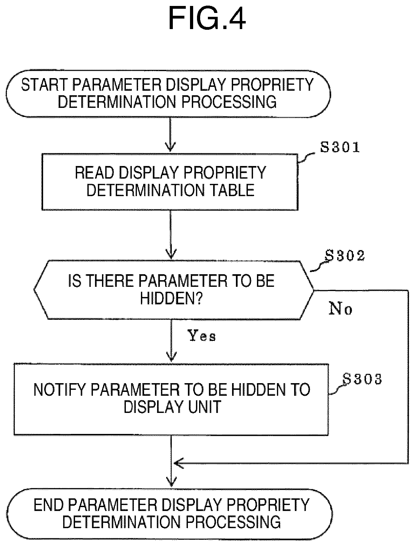

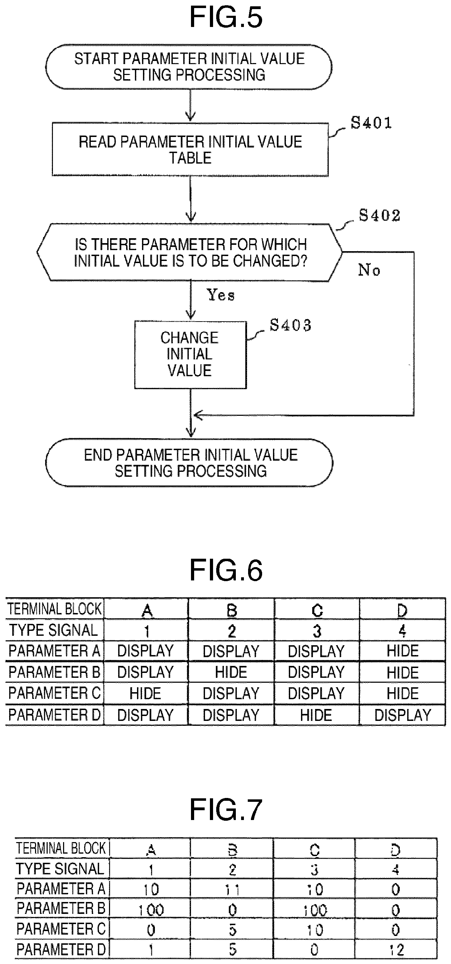

FIG. 4 is a flowchart of parameter display propriety determination processing. First, a display propriety determination table (illustrated in FIG. 6 as an example) is read (step S301). With reference to the read display propriety determination table to check (step S302) whether there is a parameter to be hidden in the parameters of the terminal block type identified in step S200. In a case where there is a parameter to be hidden, the parameter number to be hidden is notified (step S303) to the display setting unit (104) and then, the processing is finished. In a case where there is no parameter to be hidden, the processing is just finished without notification.

In an exemplary case where there are hidden parameters and there are a terminal block substrate A having eleven input terminals and seven output terminals and a terminal block substrate B having ten input terminals and five output terminals, there are deficiency of one input terminal and two output terminals in the terminal block substrate B, making it unnecessary to set the function assigned to these terminals. In addition, for example, in a case where there is a dedicated terminal block substrate C to drive a PM motor, there is no need to use the parameters unnecessary for driving the PM motor (for example, parameters used in a VF control mode), and thus, these parameters would also be hidden.

While a table is used in parameter display propriety determination, this is merely an example and other methods are applicable.

### Embodiment 3

Details of the parameter initial value setting processing (step S400) will be described in Embodiment 3.

FIG. 5 is a flowchart of parameter initial value setting processing.

First, a parameter initial value table (illustrated as an example in FIG. 7) is read (step S401). The parameter of the terminal block type identified in step S200 in the parameter initial value table is compared with a parameter value set at the previous power-on to confirm whether there is a parameter to be changed (step S402). In a case where there is a parameter to be changed, the parameter is changed (step S403) and the processing ends. Note that the step of FIG. 5 would not be executed for the one that has been judged to be as a hidden parameter in the parameter display propriety determination processing of Embodiment 2.

While a table is used in parameter display propriety determination, this is merely an example and other methods are applicable.

Alternatively, instead of using the above-described method of comparing the parameter of the identified terminal block type with the parameter value set at the previous power-on and changing the different parameter alone, it is also allowable to update the parameter value in the parameter initial value table identified in step S200 to the currently set parameter value, without performing comparison from an initial stage. In this case, there is no need to compare the parameters.

### Embodiment 4

There are various methods for generating the terminal block identification signal to identify the terminal block types.

The following are some of typical circuit configuration examples.

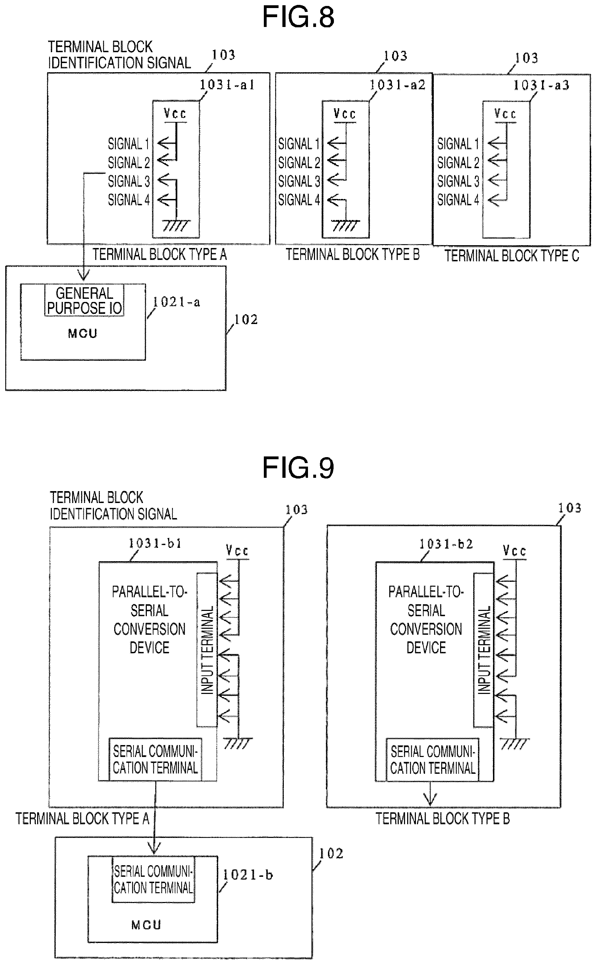

As an Embodiment 4-1, FIG. 8 illustrates an exemplary method of using a plurality of signal lines for the terminal block identification signal (1031-a), in which a combination of high/low levels is detected by a general purpose IO of the MCU (1021-a) or the like. In this method, the number of necessary signal lines increases with the increase in the number of types to be identified. Accordingly, this method is suitable for a system having relatively small number of terminal block types to be identified. The example illustrates a method of identifying the terminal block type using four signal lines. When the number of signals is n, the number of identifiable terminal block types would be 2n.

As an Embodiment 4-2, FIG. 9 illustrates a method of converting the combination of high/low levels as a terminal block identification signal (1031-b) into serial communication and transmitting the converted signal to a serial communication port of the MCU (1021-b). Since this method uses serial communication, more than one type can be identified with fewer signal lines. A typical parallel-to-serial conversion IC is an 8-bits or 16 bit IC. In the case of 8-bit IC, 256 types of terminal blocks can be identified, and in the case of 16-bit IC, 65,536 types of terminal blocks can be identified. Therefore, it is also suitable for cases where there are many types of terminal blocks to be identified.

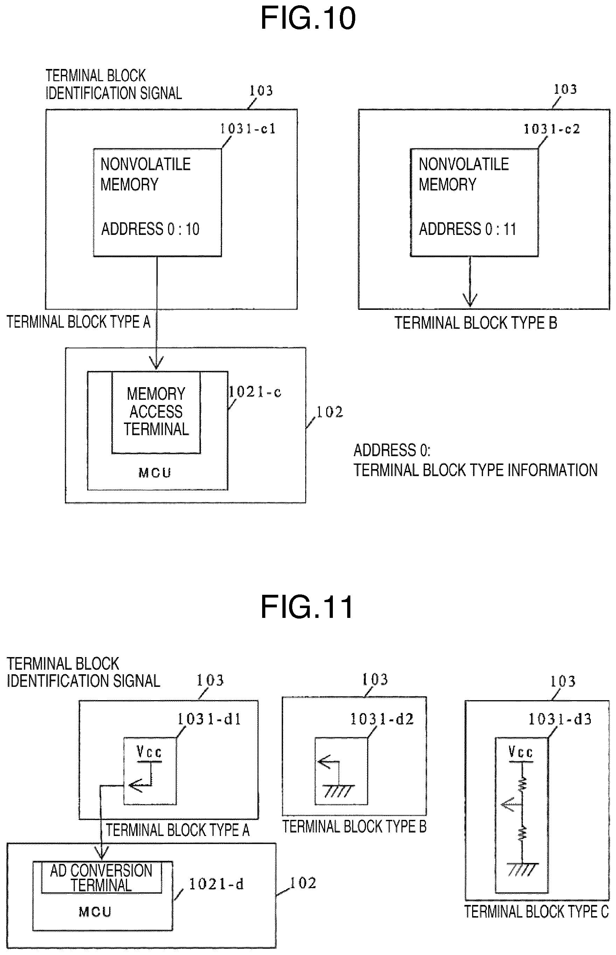

As an Embodiment 4-3, FIG. 10 illustrates a method of using a nonvolatile memory (1031-c). A nonvolatile memory is mounted on the terminal unit, and terminal block type information is stored beforehand in a specific area (address 0 in FIG. 10). This information is read by accessing the memory of the MCU (1021-c). While this method takes time and labor to write information in the memory beforehand at the time of manufacture, it is possible to discriminate between many terminal block types in accordance with the capacity of the memory.

As an Embodiment 4-4, FIG. 11 illustrates a method of directly inputting a resistance division ratio or a voltage level to an AD converter of the MCU (1021-d) as a terminal block identification signal (1031-d). While this method is used to change the resistance division ratio or the voltage level to read an AD converted value to discriminate the type, there are risks of limiting the number of distinguishable types or false recognition depending on the accuracy of the resistance and the AD converter. It would be possible to discriminate several terminal block types even when the number of identification signals is one in accordance with the accuracy of the AD converter, the division resistance, and the voltage level.

According to the embodiments described above, the power conversion device and the control device can automatically set parameters that used to be individually set by the user. It is also possible to hide unnecessary parameters without displaying them. These techniques make it possible to save time and labor for parameter setting, and possible to provide a power conversion device with the reduced risk of malfunction due to parameter setting omission.

According to the above-described present application, it is possible to provide a control device capable of distinguishing types of attached terminal blocks without providing a difference in the shapes of the connector and without using a portion of the connector pins.

Moreover, in the power conversion device according to the present application, in a control device including: a control device main body; and a terminal block detachably attached to the control device main body, the terminal block includes installation portions for first to Nth (N ≥ 2) permanent magnets, and the control device main body is located at a position in proximity to the installation portions of the first to Nth permanent magnets in a state where the terminal block is attached. The control device main body includes: first to Nth magnetic detectors to individually detect magnetism of the permanent magnets selectively installed at this installation portions; and a terminal block type discrimination section to discriminate the type of the terminal block being attached to the control device main body on the basis of detection signals indicating the presence or absence of magnetism from the first to Nth magnetic detectors.

Moreover, for example, in the present invention, it is allowable to discriminate whether the terminal block attached to the control device main body is the terminal block of a type defined beforehand on the basis of a detection signal indicating the presence or absence of magnetism from the first to Nth magnetic detectors, or it is allowable to discriminate specifically which type of terminal block is attached to the control device main body among a plurality of types of terminal blocks defined beforehand on the basis of a detection signal indicating the presence or absence of magnetism from the first to Nth magnetic detectors.

### REFERENCE SIGNS LIST

100 ... Power conversion device, 101 ... Drive unit, 102 ... Control unit, 103 ... Terminal unit, 104 ... Display setting unit, 110 ... Power supply device, 120 ... Motor, 130 ... Control device

## Claims

1. A power conversion device (100) comprising:
a control unit (102) configured to output a signal to drive a motor (120); and
a terminal unit (103) configured to transmit to the control unit (102) an identification signal, generated by an identification signal generation unit (1031) included in the terminal unit (103),
wherein the control unit (102) is further configured to set a control parameter on the basis of the identification signal transmitted by the terminal unit (103,
**characterized in that** the identification signal provides information related to a type of a terminal block connected to the control unit (102).

2. The power conversion device (100) according to claim 1,
wherein the control unit (102) is configured to judge whether the identification signal is the same as an identification signal read at the time of driving the power conversion device (100) at a previous time.

3. The power conversion device (100) according to claim 1,
wherein the control unit (102) is configured to set the control parameter using information related to a parameter display propriety function configured to identify, on the basis of the identification signal, whether the control parameter shall be hidden .

4. The power conversion device (100) according to claim 3,
wherein the control unit (102) is configured to perform setting of a parameter determined to have display permission by the information related to the parameter display propriety function.

5. The power conversion device (100) according to claim 1,
wherein the control unit (102) is configured to set the parameter on the basis of information related to an initial setting value predetermined on the basis of the identification signal.

6. A power conversion device control method comprising:
a control step of outputting a signal to drive a motor (120); and
an identification signal transmission step of transmitting an identification signal, generated by an identification signal generation unit (1031) included in a terminal unit (103,
wherein the control step sets a parameter on the basis of the identification signal transmitted by the identification signal transmission step, **characterized in that** the identification signal provides information related to a type of a terminal block connected to the control unit (102).

7. The power conversion device control method according to claim 6,
wherein the control step judges whether the identification signal is the same as an identification signal read at the time of driving the power conversion device at a previous time.

8. The power conversion device control method according to claim 6,
wherein the control step sets the parameter using information related to a parameter display propriety processing which identifies, on the basis of the identification signal, whether the control parameter shall be hidden.

9. The power conversion device control method according to claim 8,
wherein the control step performs setting of a parameter determined to have display permission by the information related to the parameter display propriety processing.

10. The power conversion device control method according to claim 6,
wherein the control step sets the parameter on the basis of information related to an initial setting value predetermined on the basis of the identification signal.

## Patentansprüche

1. Leistungsumsetzungsvorrichtung (100), die Folgendes umfasst:
eine Steuereinheit (102), die konfiguriert ist, ein Signal auszugeben, um einen Motor (120) anzusteuern, und
eine Anschlusseinheit (103), die konfiguriert ist, an die Steuereinheit (102) ein Identifikationssignal zu senden, das durch eine Einheit (1031) zum Erzeugen eines Identifikationssignals, die in der Anschlusseinheit (103) enthalten ist, erzeugt wird,
wobei die Steuereinheit (102) ferner konfiguriert ist, einen Steuerparameter auf der Basis des Identifikationssignals, das durch die Anschlusseinheit (103) gesendet wird, einzustellen,
**dadurch gekennzeichnet, dass** das Identifikationssignal Informationen bereitstellt, die sich auf einen Typ eines Anschlussblocks, der mit der Steuereinheit (102) verbunden ist, beziehen.

2. Leistungsumsetzungsvorrichtung (100) nach Anspruch 1,
wobei die Steuereinheit (102) konfiguriert ist, zu bewerten, ob das Identifikationssignal dasselbe ist wie ein Identifikationssignal, das zu einem Zeitpunkt gelesen wurde, zu dem die Leistungsumsetzungsvorrichtung (100) zu einer früheren Zeit angesteuert wurde.

3. Leistungsumsetzungsvorrichtung (100) nach Anspruch 1,
wobei die Steuereinheit (102) konfiguriert ist, die Steuerparameter unter Verwendung von Informationen, die sich auf eine Parameteranzeige-Angemessenheitsfunktion beziehen, die konfiguriert ist, auf der Basis des Identifikationssignals zu identifizieren, ob der Steuerparameter versteckt werden soll, einzustellen.

4. Leistungsumsetzungsvorrichtung (100) nach Anspruch 3,
wobei die Steuereinheit (102) konfiguriert ist, die Einstellung eines Parameters durchzuführen, für den durch die Informationen, die sich auf die Parameteranzeige-Angemessenheitsverarbeitung beziehen, bestimmt ist, dass er eine Anzeigeerlaubnis besitzt.

5. Leistungsumsetzungsvorrichtung (100) nach Anspruch 1,
wobei die Steuereinheit (102) konfiguriert ist, den Parameter auf der Basis von Informationen, die sich auf einen Anfangseinstellwert beziehen, der auf der Basis des Identifikationssignals vorgegeben ist, einzustellen.

6. Verfahren zum Steuern einer Leistungsumsetzungsvorrichtung, das Folgendes umfasst:
einen Steuerschritt zum Ausgeben eines Signals, um einen Motor (120) anzusteuern, und
einen Schritt des Sendens eines Identifikationssignals, um ein Identifikationssignal zu senden, das durch eine Einheit (1031) zum Erzeugen eines Identifikationssignals, die in einer Anschlusseinheit (103) enthalten ist, erzeugt wird,
wobei der Steuerschritt einen Parameter auf der Basis des Identifikationssignals, das durch den Schritt des Sendens eines Identifikationssignals gesendet wird, einstellt, **dadurch gekennzeichnet, dass** das Identifikationssignal Informationen bereitstellt, die sich auf einen Typ eines Anschlussblocks, der mit der Steuereinheit (102) verbunden ist, beziehen.

7. Verfahren zum Steuern einer Leistungsumsetzungsvorrichtung nach Anspruch 6,
wobei der Steuerschritt bewertet, ob das Identifikationssignal dasselbe ist wie ein Identifikationssignal, das zu einem Zeitpunkt gelesen wurde, zu dem die Leistungsumsetzungsvorrichtung zu einer früheren Zeit angesteuert wurde.

8. Verfahren zum Steuern einer Leistungsumsetzungsvorrichtung nach Anspruch 6,
wobei der Steuerschritt den Parameter unter Verwendung von Informationen, die sich auf eine Parameteranzeige-Angemessenheitsverarbeitung beziehen, die auf der Basis des Identifikationssignals identifiziert, ob der Steuerparameter versteckt werden soll, einstellt.

9. Verfahren zum Steuern einer Leistungsumsetzungsvorrichtung nach Anspruch 8,
wobei der Steuerschritt die Einstellung eines Parameters durchführt, für den durch die Informationen, die sich auf die Parameteranzeige-Angemessenheitsverarbeitung beziehen, bestimmt ist, dass er eine Anzeigeerlaubnis besitzt.

10. Verfahren zum Steuern einer Leistungsumsetzungsvorrichtung nach Anspruch 6,
wobei der Steuerschritt den Parameter auf der Basis von Informationen, die sich auf einen Anfangseinstellwert beziehen, der auf der Basis des Identifikationssignals vorgegeben ist, einstellt.

## Revendications

1. Dispositif de conversion de puissance (100) comprenant :
une unité de commande (102) configurée pour sortir un signal pour piloter un moteur (120) ; et
une unité terminale (103) configurée pour transmettre à l'unité de commande (102) un signal d'identification, généré par une unité de génération de signal d'identification (1031) incluse dans l'unité terminale (103),
dans lequel l'unité de commande (102) est en outre configurée pour régler un paramètre de commande sur la base du signal d'identification transmis par l'unité terminale (103),
**caractérisé en ce que**
le signal d'identification fournit une information en relation avec un type d'un bloc terminal connecté à l'unité de commande (102).

2. Dispositif de conversion de puissance (100) selon la revendication 1, dans lequel l'unité de commande (102) est configurée pour juger si le signal d'identification est le même qu'un signal d'identification lu au moment de piloter le dispositif de conversion de puissance (100) à un moment précédent.

3. Dispositif de conversion de puissance (100) selon la revendication 1, dans lequel l'unité de commande (102) est configurée pour régler le paramètre de commande en utilisant une information en relation avec une fonction de propriété d'affichage de paramètre configurée pour identifier, sur la base du signal d'identification, si le paramètre de commande doit être caché.

4. Dispositif de conversion de puissance (100) selon la revendication 3, dans lequel l'unité de commande (102) est configurée pour effectuer un réglage d'un paramètre déterminé pour avoir une permission d'affichage via l'information en relation avec la fonction de propriété d'affichage de paramètre.

5. Dispositif de conversion de puissance (100) selon la revendication 1, dans lequel l'unité de commande (102) est configurée pour régler le paramètre sur la base d'une information en relation avec une valeur de réglage initiale prédéterminée sur la base du signal d'identification.

6. Procédé de commande de dispositif de conversion de puissance comprenant :
une étape de commande consistant à sortir un signal pour piloter un moteur (120) ; et
une étape de transmission de signal d'identification consistant à transmettre un signal d'identification, généré par une unité de génération de signal d'identification (1031) incluse dans une unité terminale (103),
dans lequel l'étape de commande règle un paramètre sur la base du signal d'identification transmis lors de l'étape de transmission de signal d'identification,
**caractérisé en ce que**
le signal d'identification fournit une information en relation avec un type d'un bloc terminal connecté à l'unité de commande (102).

7. Procédé de commande de dispositif de conversion de puissance selon la revendication 6,
dans lequel l'étape de commande juge si le signal d'identification est le même qu'un signal d'identification lu au moment de piloter le dispositif de conversion de puissance à un moment précédent.

8. Procédé de commande de dispositif de conversion de puissance selon la revendication 6,
dans lequel l'étape de commande règle le paramètre en utilisant une information en relation avec un traitement de propriété d'affichage de paramètre qui identifie, sur la base du signal d'identification, si le paramètre de commande doit être caché.

9. Procédé de commande de dispositif de conversion de puissance selon la revendication 8,
dans lequel l'étape de commande effectue un réglage d'un paramètre déterminé pour avoir une permission d'affichage via l'information en relation avec le traitement de propriété d'affichage de paramètre.

10. Procédé de commande de dispositif de conversion de puissance selon la revendication 6,
dans lequel l'étape de commande règle le paramètre sur la base d'une information en relation avec une valeur de réglage initiale prédéterminée sur la base du signal d'identification.
